Europäisches Patentamt

European Patent Office

Office européen des brevets

(11) Publication number: **0 244 430 B1**

# EUROPEAN PATENT SPECIFICATION

(45) Date of publication of patent specification: **27.11.91**

(51) Int. Cl.⁵: **C08F 299/04**, C08J 3/07, C08L 67/06, //C03C25/02

(21) Application number: **86905647.3**

(22) Date of filing: **12.09.86**

(86) International application number:
**PCT/US86/01875**

(87) International publication number:
**WO 87/02371 (23.04.87 87/09)**

The file contains technical information submitted after the application was filed and not included in this specification

(54) **POLYESTER EMULSION.**

(30) Priority: **21.10.85 US 789887**

(43) Date of publication of application:
**11.11.87 Bulletin 87/46**

(45) Publication of the grant of the patent:
**27.11.91 Bulletin 91/48**

(84) Designated Contracting States:
**BE DE FR IT NL**

(56) References cited:
**EP-A- 0 181 839**
**DE-A- 2 903 022**
**GB-A- 1 434 448**
**US-A- 3 440 193**

(73) Proprietor: **OWENS-CORNING FIBERGLAS CORPORATION**
**Fiberglas Tower 26**
**Toledo, Ohio 43659(US)**

(72) Inventor: **BRANNON, Robert, Clifford**
**613 Moull Street**
**Newark, OH 43055(US)**
Inventor: **COLEMAN, David, Alan**
**53 Edgemill Drive**
**Newark, OH 43055(US)**
Inventor: **MILLER, David, George**
**42 Aspen Lane SW**
**Pataskala, OH 43062(US)**

(74) Representative: **West, Alan Harry et al**
**R.G.C. Jenkins & Co. 26 Caxton Street**
**London SW1H 0RJ(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

This invention relates to polyester emulsions intended for size compositions for glass fibers which may be incorporated into molding compounds.

The use of unsaturated polyester compounds in combination with thermoplastic resins and fillers to produce molding compositions is well known. These compositions, intended to polymerize when molded · under heat and pressure, are generally combined with fillers and chopped glass, produced from roving, to produce molded products having appearance surfaces with a minimum of irregularities or undulations known as Class A surfaces.

The use of chopped glass as reinforcement in such molding compounds is well known. The chopped glass is produced in the form of individual strands which are sized, gathered into rovings, chopped to the desired length and incorporated into the resin composite prior to molding.

The sizes generally comprise a polyester emulsion base, a lubricant and film formers and are extremely important in imparting to the reinforcing glass its ability to be wetted by the molding compound. These sizes are also important in that they protect the glass in its handling subsequent to being sized and are influential in minimizing the amount of fuzz and fly which is produced on the glass, the fuzz and fly having a significant effect upon the appearance surface of the molded product.

The sized glass fibers generally are employed as reinforcement for sheet molding compounds (SMC) and bulk moulding compounds (BMC).

EP-A-0181839 describes emulsions of unsaturated polyester resins for dressing glass fibers for the production of glass reinforced resin articles and claims high mechanical stability, low hydrophilic property, high resistance to hydrolysis and good substantivity and compatibility with the resin matrix. The unsaturated polyester emulsions contain, however not only emulsifying agents but also co-stabilizing substances, one example being a combination of polypropylene glycol with polyethylene glycol side chains, nonylphenol condensate with 20 molecules of ethylene oxide and a tetraethyl silicate stabilizer.

According to the invention, there is now provided an improved polyester emulsion for polyester-based sizes, the polyester emulsion, including only a single emulsifier and requiring no stabilizers, being cure stable and exhibiting very low static generation which allows antistatic methods to work better even at low relative humidity. Glass fibers sized with such polyester emulsion sizes are particularly suitable for use in sheet molding compounds.

According to the invention, therefore, there is provided an aqueous polyester emulsion consisting essentially of an unsaturated polyester resin emulsified with one emulsifier which is nonylphenoxypoly (ethyleneoxy) ethanol having an average of 100 ethyleneoxy units.

The nonylphenoxypoly (ethyleneoxy) ethanol is preferably used in an amount of 2 to 20 weight percent, more preferably 2 to 5 weight percent, based on the unsaturated polyester resin.

Unsaturated polyesters useful in the invention typically contain a polyesterification product of one or more ethylenically unsaturated dicarboxylic acids or anhydrides such as maleic or fumaric, with one or more glycols such as ethylene or propylene glycol and, sometimes, minor proportions of other aromatic or aliphatic mono- or dicarboxylic acids or anhydrides and/or other mono- or polyhydroxyl compounds. They also typically contain an ethylenically unsaturated monomer, such as styrene, copolymerizable with the unsaturated polyester for curing.

The unsaturated polyesters are preferably polyesterification products of an ethylenically unsaturated dicarboxylic acid or anhydride such as maleic acid or anhydride (which will ordinarily and preferably be at least partially isomerized to the fumarate form during the polyesterification) and a glycol such as ethylene or propylene glycol or the corresponding epoxide. Minor molar proportions of other acid and/or hydroxyl reactants can be incorporated, if desired, according to generally accepted practice. For example, the reactivity of the polyester in the addition copolymerization reaction involved in curing can be reduced by substituting a dicarboxylic acid or anhydride not having any ethylenic unsaturation for a minor molar proportion of the ethylenically unsaturated dicarboxylic acid or anhydride. Either aliphatic or aromatic substitutes may be employed, the most common probably being isophthalic acid. Minor molar proportions of monofunctional carboxylic acid or alcohol reactants can also be incorporated; these can serve not only to modify the reactivity of the resultant polyester and its compatibility with other size components but can also be employed to control its acid and/or hydroxyl value independently of its average molecular weight.

The polyester emulsions of the invention comprise such a conventional unsaturated polyester emulsified with a nonylphenoxypoly (ethyleneoxy) ethanol having an average of 100 ethyleneoxy units. One such material is Igepal CO-997 from GAF (Igepal is a registered Trade Mark). This surfactant does not degrade during drying and does not interfere with the cure of the unsaturated polyester.

The polyester emulsions of the invention may be used in aqueous size compositions comprising,

EP 0 244 430 B1

approximately, on a weight percent basis:

|  | Weight Percent |
|---|---|
| Cure-stable polyester emulsion | 50 - 55 |
| Polyvinyl acetate copolymer | 40 - 45 |
| Glacial acetic acid | 0 - 0.3 |
| Silane | 2 - 4 |
| Static insensitive lubricant | 0.05 - 2 |
| Wax | 0 - 3 |
| Water | Balance |

Final solids content ranges from 10 to 15 percent. The sizing composition is suitably applied so as to deposit a dried size coating on the fibers corresponding to 0.2 to 3.0 weight percent of the fibers (LOI).

Preferably, the size composition is prepared according to the following formulation:

|  | Weight Percent |
|---|---|
| Cure-stable polyester emulsion | 51.5 - 53.5 |
| Polyvinylacetate copolymer | 41.5 - 43.5 |
| Glacial acetic acid | 0 - 0.3 |
| Silane | 2 - 3 |
| Static insensitive lubricant | 0.05 - 1 |
| Wax | 0 - 2 |
| Water | Balance |

Preferably, final solids content ranges from 11 to 14 percent. The sizing composition is applied so as to deposit a dried size coating on the fibers corresponding to about 0.2 to 2 weight percent of the fibers (LOI).

In the following Examples, a cure-stable polyester emulsion according to the invention is compared with a conventional polyester emulsion in which the emulsifier is a block copolymer of polyoxethylene and polyoxypropylene available under the trade name Pluronic F-77 from BASF ( "Pluronic" is a registered Trade Mark).

Both the cure stable polyester emulsion of the invention used in Example 1 (designated CX 1717) and the control polyester emulsion used in Example II (designated CX 412) are prepared from E-400 polyester available from Owens-Corning Fiberglas. E-400 is a convention polyester prepared from phthalic anhydride (26%), maleic anhydride (17%), propylene glycol (28%) and styrene (27%). The balance is Igepal CO-997 for the emulsion of the invention and Pluromic F-77 for the control emulsion, and very small amounts of toluhydroquinone and p-benzoquinone inhibitors.

The emulsification procedure that was used is as follows. The E-400 polyester was charged to a mixer fitted with a chiller. Next, the surfactant (emulsifier) was added, Igepal CO-997 being heated to a pourable liquid before being added. The polyester and surfactant are mixed for 1 hour at a high shear of 700 and a sweep of 10. Water was then added to achieve desired solids content. After the addition was complete, the batch was mixed for 10 minutes and then sampled for particle size and solids. Solids and viscosity were finally adjusted by water addition.

In the Examples, the static insensitive lubricant is a combination of cocoa amine acetate and a polyethyleneimine. This chemistry was selected to obtain low fuzz during SMC processing without affecting cure of the polyester or PVAC film formers.

The pH of the size typically ranges from 2 to 4 and preferably is about 3. The words 'Alkaril,' 'Cirrasol' and 'Carbowax' used in the following Examples are registered Trade Marks.

A size composition using a polyester emulsion of the invention was prepared from the following ingredients:

3

| | Weight Percent |
|---|---|
| Cure stable polyester emulsion; (according to the invention, designated CX1717) | 52.31 |
| Polyvinylacetate copolymer; (National Starch 25-2828) | 42.80 |
| Gamma-methacryloxy- propyltrimethoxysilane; (Union Carbide A-174) | 2.94 |
| Cocoa amine acetate; (Alkaril PF-710) | 0.25 |
| Polyethyleneimine;(Emery 6760u) | 0.25 |
| Carbowax;(Union Carbide C-1000) | 1.45 |
| Deionized water | Balance |

Final solids content was about 14 weight percent. The sizing composition was applied so as to deposit a dried size coating on the fibers corresponding to about 2 weight percent of the fibers (LOI).

Example II (Control)

A control size composition was prepared from the following ingredients:

4

|                                                          | Weight Percent |
| -------------------------------------------------------- | -------------- |
| Conventional polyester emulsion;<br>(Owens-Corning Fiberglas, CX412) | 64.33 |
| Polyvinylethylene emulsion;<br>(Air Products A400) | 15.20 |
| Polyvinylacetate copolymer;<br>(National Starch 25-2828) | 13.98 |
| Gamma-methacryloxy-<br>propyltrimethoxysilane;<br>(Union Carbide A-174) | 2.85 |
| (Cirrasol 185AEAN) pelargonic<br>acid and tetraethylenepentamine | 2.22 |
| Carbowax;(Union Carbide C-1000) | 1.41 |
| Deionized water | Balance |

The percent solids in the size composition was about 13. The strand solids corresponded to about 2 weight percent of the weight of the fibers (LOI).

Example III

The size of Example I and the control size of Example II were prepared by conventional size preparation methods and applied to a glass strand using conventional application techniques. The incorporation of the sized strands into a resin composition was performed by conventional methods.

Glass fibers used in the practice of this invention can be, but are not restricted to, "E" glass fibers, well known to those skilled in the art. Such fibers are described in U.S. Patent No. 2,334,961.

Strands of glass fibers are produced by pulling several hundred or more tiny molten streams of glass which issue from holes in the bottom of a bushing over a size-applying apron to a gathering shoe which groups the fibers together into a strand. This strand then proceeds to a traverse mechanism and winding drum which provides the pulling action which attenuates the molten glass and coils the strand into a package. The fibers are individually separated at the time that they pass over the size applicator, so that the surfaces of the fibers are substantially completely coated before they are drawn together into a strand. This size acts as a lubricant which separates the individual filaments, and if the filaments are not separated by the size, they will scratch each other and break as they are flexed and drawn over guide eyes or other contact surfaces in subsequent operations such as roving or SMC compounding.

Example IV

Glass fibers coated with the size of Example I and the control size of Example II were compared in a number of tests, the results of which are set out in the accompanying drawings, in which
Fig. 1 is a graph showing surfactant stability as measured by isothermal thermogravimetric weight loss;
Fig. 2 is a graph showing acetone solubility through the forming cake;

Fig. 3 shows electrostatic data obtained from the size of Example I; and

Fig. 4 shows electrostatic data obtained from the control size of Example II.

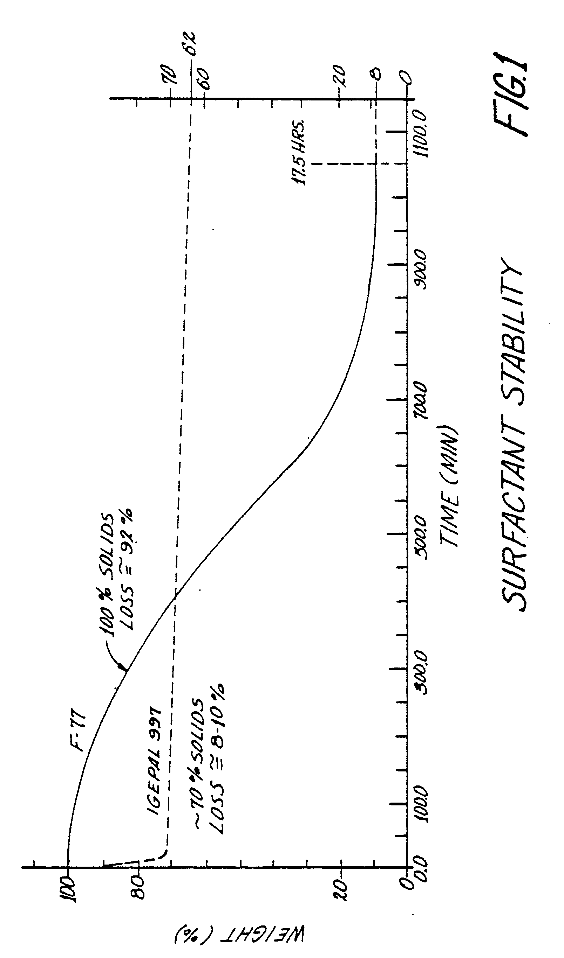

Fig. 1 shows the thermal stabilities in air of Igepal CO-997 and Pluronic F-77 surfactants. The surfactant used in the invention only loses about 8 to 10% solids over 17.5 hours at 130°C (265°F). The control surfactant loses about 92% solids under the same conditions.

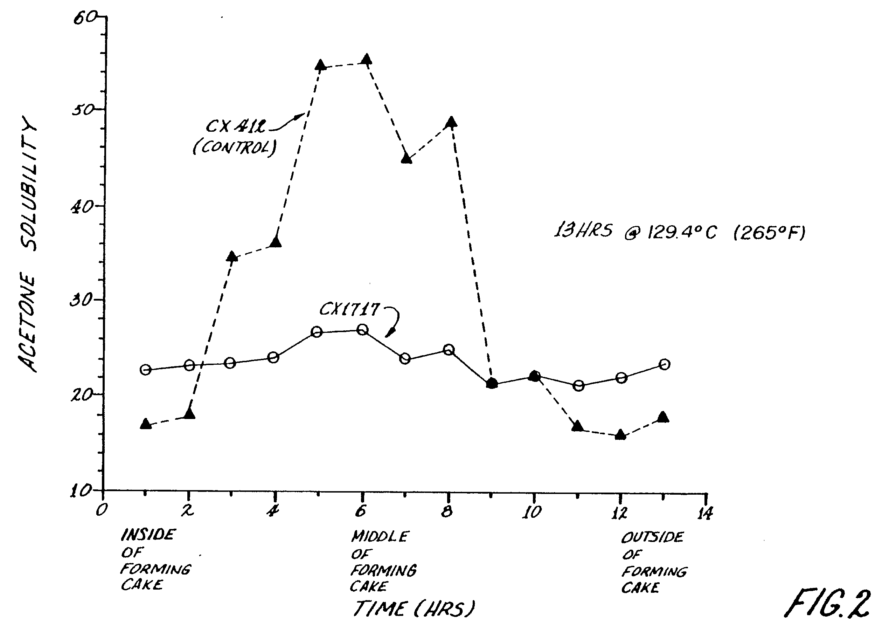

Fig. 2 shows the acetone solubilities for the sized glass fibers of Example I and Example II dried over 13 hours at 130°C (265°F). The size of the invention consistently had lower solubility at various positions through the forming cake. Consistency of cure through the forming cake is due to the improved thermal stability of Igepal CO-997 surfactant relative to Pluronic F-77. The term "forming cake" is used to identify strands of sized glass fibers prior to further finishing operations. The effectiveness of the Igepal surfactant in controlling solubility and cure of the polyester film former is apparent from this data.

Electrostatic properties were obtained on forming cakes made from each of the sizes of Examples I and II. In this test, a single strand from a forming cake is triboelectrically charged by a constant friction device and monitored for residual charge with an electrostatic probe. Both generation and dissipation mechanisms are characterized by this method. The monitored charge was converted into a relative frequency histogram, which includes several strands from the same forming cake.

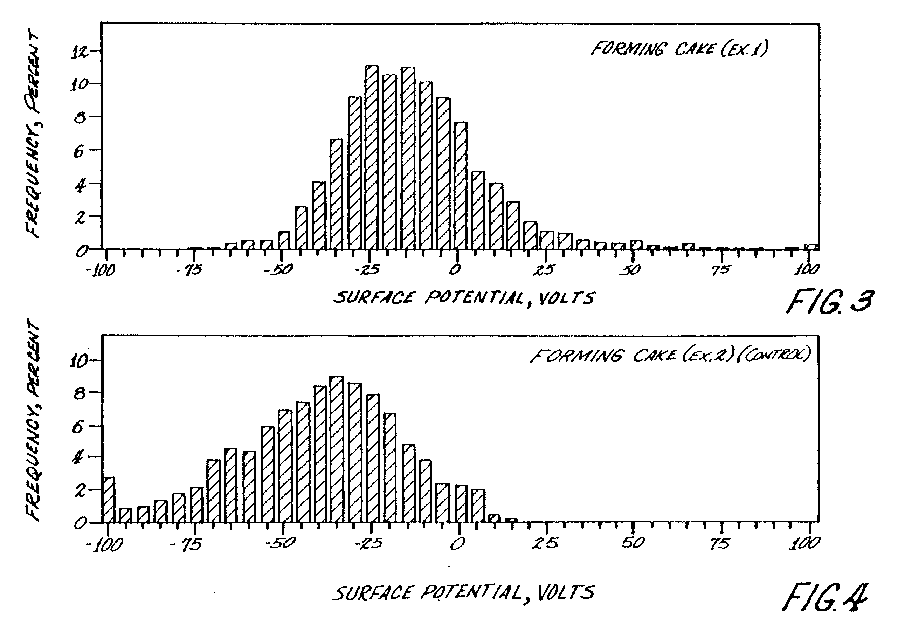

The static data for the sizes of Examples I and II are shown in Figures 3 and 4, respectively. The size of Example I reduced the amount of highly charged negative surface potential. This results in a more narrow charge distribution and a nominal charge which is closer to zero. Both of these factors improve static performance during SMC processing. Static buildup on chopper surfaces is reduced, and uniformity of the chopped glass bed is improved.

## Claims

1. An aqueous polyester emulsion consisting essentially of an unsatisfied polyester resin emulsified with one emulsifier which is nonylphenoxypoly (ethyleneoxy) ethanol having an average of 100 ethyleneoxy units.

2. A polyester emulsion according to claim 1, wherein the amount of nonylphenoxypoly (ethyleneoxy) ethanol is from 2 to 20 weight percent based on the unsaturated polyester resin.

3. A polyester emulsion according to claim 2, wherein the amount of nonylphenoxypoly (ethyleneoxy) ethanol is from 2 to 5 weight percent based on the unsaturated polyester resin.

4. A polyester emulsion according to any one of claims 1 to 3, wherein the unsaturated polyester resin comprises an ethylenically unsaturated polyester and an ethylenically unsaturated monomer copolymerizable with the polyester.

5. A polyester emulsion according to claim 4, wherein the unsaturated polyester is prepared from an ethylenically unsaturated dicarboxylic acid or anhydride and a glycol or corresponding epoxide.

6. A polyester emulsion according to claim 4, wherein the unsaturated polyester resin is prepared from phthalic anhydride, maleic anhydride, propylene glycol and styrene.

7. An aqueous size composition comprising a polyester emulsion according to any one of claims 1 to 6, and water.

## Revendications

1. Emulsion aqueuse de polyester consistant essentiellement en une résine de polyester insaturé, émulsifiée par un émulsifiant qui est le nonylphénoxypoly (éthylèneoxy) éthanol ayant une moyenne de 100 motifs éthylèneoxy.

2. Emulsion de polyester selon la revendication 1, dans laquelle la quantité de nonylphénoxypoly (éthylèneoxy) éthanol est de 2 à 20 pour cent en poids sur la base de la résine de polyester insaturé.

3. Emulsion de polyester selon la revendication 2, dans laquelle la quantité de nonylphénoxypoly (éthylèneoxy) éthanol est de 2 à 5 pour cent en poids sur la base de la résine de polyester insaturé.

4. Emulsion de polyester selon l'une quelconque des revendications 1 à 3, dans laquelle la résine de polyester insaturé comprend un polyester à insaturation éthylénique et un monomère à insaturation éthylénique copolymérisable avec le polyester.

5. Emulsion de polyester selon la revendication 4, dans laquelle le polyester insaturé est préparé à partir d'un acide ou anhydride d'acide dicarboxylique à insaturation éthylénique et d'un glycol ou époxyde correspondant.

6. Emulsion de polyester selon la revendication 4, dans laquelle la résine de polyester insaturé est préparée à partir de l'anhydride phtalique, de l'anhydride maléique, du propylène glycol et du styrène.

7. Composition aqueuse d'apprêtage comprenant une émulsion de polyester conforme à l'une quelconque des revendications 1 à 6, et de l'eau.

## Patentansprüche

1. Wäßrige Polyesteremulsion, die im wesentlichen aus einem ungesättigten Polyesterharz besteht, das mit einem Emulgator emulgiert ist, bei dem es sich um Nonylphenoxypoly(ethylenoxy)-ethanol mit einem Mittelwert von 100 Ethylenoxyeinheiten handelt.

2. Polyesteremulsion nach Anspruch 1, bei der die auf das ungesättigte Polyesterharz bezogene Menge des Nonylphenoxypoly(ethylenoxy)ethanols 2 bis 20 Masse% beträgt.

3. Polyesteremulsion nach Anspruch 2, bei der die auf das ungesättigte Polyesterharz bezogene Menge des Nonylphenoxypoly(ethylenoxy)ethanols 2 bis 5 Masse% beträgt.

4. Polyesteremulsion nach einem der Ansprüche 1 bis 3, bei der das ungesättigte Polyesterharz einen ethylenisch ungesättigten Polyester und ein mit dem Polyester copolymerisierbares, ethylenisch ungesättigtes Monomer enthält.

5. Polyesteremulsion nach Anspruch 4, bei der der ungesättigte Polyester aus einer ethylenisch ungesättigten Dicarbonsäure oder deren Anhydrid und einem Glykol oder einem entsprechenden Epoxid hergestellt ist.

6. Polyesteremulsion nach Anspruch 4, bei der das ungesättigte Polyesterharz aus Phthalsäureanhydrid, Maleinsäureanhydrid, Propylenglykol und Styrol hergestellt ist.

7. Wäßriges Schlichtemittel, das eine Polyesteremulsion nach einem der Ansprüche 1 bis 6 und Wasser enthält.

SURFACTANT STABILITY

FIG.1

FIG.2

EP 0 244 430 B1

FIG. 3

FIG. 4